# EUROPÄISCHE PATENTSCHRIFT

(11) **EP 3 034 781 B1**
(45) Veröffentlichungstag und Bekanntmachung des Hinweises auf die Patenterteilung: **01.05.2019**
(21) Anmeldenummer: 15196631.4
(22) Anmeldetag: 27.11.2015
(51) Int. Cl.: F01D 5/02, F01D 5/04, F02C 6/12

(54) **ABGASTURBOLADER**
EXHAUST GAS TURBO CHARGER
TURBOCOMPRESSEUR À GAZ D'ÉCHAPPEMENT

(30) Priorität: 18.12.2014 DE 102014226477
(43) Veröffentlichungstag der Anmeldung: 22.06.2016
(73) Patentinhaber: BMTS Technology GmbH & Co. KG, 70376 Stuttgart (DE)
(72) Erfinder: STRIEDELMEYER, Thomas, 70378 Stuttgart (DE); SCHRAY, Jochen, 71739 Oberriexingen (DE)
(74) Vertreter: BRP Renaud & Partner mbB Rechtsanwälte Patentanwälte Steuerberater

(56) Entgegenhaltungen:
- WO-A1-2013/162874
- WO-A1-2014/046927
- WO-A1-2014/165355
- JP-A- 2002 047 944

## Beschreibung

Die Erfindung betrifft einen Abgasturbolader mit einem Turbinenrad gemäß Anspruch 1.

Im Automobilbereich wird zur Verbrauchsreduzierung von Brennkraftmaschinen das sogenannte Downsizing eingesetzt. Dabei wird der Hubraum der Brennkraftmaschinen verkleinert und zusätzlich eine Aufladeeinrichtung, wie beispielsweise ein Abgasturbolader eingesetzt, um die gewünschte Leistung zu erzielen. Aufgrund von reduzierten Drosselverlusten und Reibungsverlusten kann auf diese Weise die Effizienz der Brennkraftmaschine verbessert werden. Abgasturbolader zeigen jedoch ein schlechteres Ansprechverhalten, insbesondere bei geringen Drehzahlen der Brennkraftmaschine, welches allgemein als Turboloch bezeichnet wird. Bei geringen Leistungen, beispielsweise bei niedrigen Drehzahlen oder im Leerlauf, ist nicht genug Energie im Abgasstrom vorhanden, um den Turbolader auf eine ausreichende Drehzahl zu bringen, sodass der Ladedruck zu gering ist. Die Zeit, die der Abgasturbolader nach Anforderung einer erhöhten Leistung an der Brennkraftmaschine benötigt, um auf die für die benötigte Leistung erforderliche Drehzahl zu kommen, definiert das Turboloch. Gerade bei dem Downsizing von Brennkraftmaschinen, bei denen eine relativ große Leistungssteigerung durch den Abgasturbolader erzielt wird, ist das Turboloch besonders ausgeprägt, da ein größerer Turbolader benötigt wird, welcher wiederum mehr Energie benötigt, um auf die entsprechende Drehzahl zu kommen. Aus diesem Grund muss das Trägheitsmoment des Turboladers reduziert werden, wodurch das Ansprechverhalten des Abgasturboladers verbessert werden kann.

Beispielsweise kann dies durch den Einsatz von leichten hochfesten Materialien erreicht werden. Da zumindest das Turbinenrad des Abgasturboladers sehr hohen Temperaturen des Abgasstrangs ausgesetzt ist, ist die Auswahl möglicher leichter Materialien eingeschränkt. Eine Möglichkeit sind sogenannte Titanaluminid Legierungen, welche temperaturfest sind und eine hohe spezifische Festigkeit aufweisen. Allerdings zeigen solche Titanaluminidverbindungen durch hohe Temperaturen, Fliehkräfte und Kriecheffekte irreversible plastische Verformungen am Turbinenrad. Dies kann wiederum eine Unwucht in den Turbinenrädern erzeugen sowie die Lebensdauer des Turbinenrades herabsetzen.

Des Weiteren kann durch gezielte Geometrieanpassung, beispielsweise durch Scalloping der Turbinenräder, das Trägheitsmoment der Turbinenräder verbessert werden. Dabei wird der Radrücken zwischen den Schaufeln ausgespart, sodass in achsfernen Bereichen des Turbinenrades Gewicht gespart wird, wodurch das Trägheitsmoment reduziert wird. Allerdings führt dies dazu, dass Abgas hinter den Turbinenschaufeln vorbeiströmen kann und somit der Wirkungsgrad des Turbinenrades und damit des Abgasturboladers verschlechtert wird. Das Dokument WO 2014/046927 A1 offenbart einen Abgasturbolader nach dem Oberbegriff des Anspruchs 1. Die Dokumente JP 2002-47944 A und WO 2013/162874 A1 offenbaren weitere Beispiele von Abgasturboladern, deren Turbinenräder mit Aussparungen versehen sind.

Der vorliegenden Erfindung liegt die Aufgabe zur Grunde für einen Abgasturbolader, insbesondere für ein Turbinenrad eines Abgasturboladers, eine verbesserte oder zumindest andere Ausführungsform bereit zu stellen, welche sich insbesondere dadurch auszeichnet, dass das Trägheitsmoment verbessert und die Lebensdauer verlängert sind, ohne dabei den Wirkungsgrad zu beeinträchtigen.

Diese Aufgabe wird erfindungsgemäß durch den unabhängigen Anspruch gelöst. Vorteilhafte Weiterbildungen sind Gegenstand der Unteransprüche.

Die Erfindung beruht auf dem allgemeinen Gedanken ein Turbinenrad aus Titanaluminid derart zu gestalten, dass Bauteilspannungen im Radrücken des Turbinenrads reduziert sind, sodass es im Einsatz des Turbinenrads zu geringeren plastischen Verformungen und dadurch zu weniger Unwucht am Turbinenrad kommt. Erreicht wird dies dadurch, dass der Radrücken des Turbinenrades mindestens einen Aussparungsbereich mit reduzierter axialer Dicke aufweist. Dieser Aussparungsbereich liegt insbesondere radial außen am Radrücken, sodass dadurch zum einen das Trägheitsmoment reduziert wird und zum anderen erzeugt das ausgesparte Material am Radrücken keine Fliehkräfte, welche durch das Material des Radrückens gehalten werden müssten und somit Spannungen im Material erzeugen würden. Somit können auf diese Weise sowohl das Trägheitsmoment als auch Spannungen im Radrücken, welche zu Unwucht führen würden, reduziert werden. Dadurch wird das Ansprechverhalten des Abgasturboladers verbessert. Darüber hinaus wird die Geräuschentwicklung verringert und die Lebensdauer der Lagerung des Abgasturboladers verlängert.

Eine günstige Möglichkeit sieht vor, dass der mindestens eine Aussparungsbereich durch einen Absatz am Radrücken gebildet ist, der den mindestens einen Aussparungsbereich von dem restlichen Radrücken trennt. Der restliche Radrücken weist somit eine größere axiale Dicke auf als der Aussparungsbereich.

Vorzugsweise liegt der restliche Radrücken radial innerhalb des mindestens einen Aussparungsbereichs. Dadurch kann der restliche Radrücken die auftretenden Fliehkräfte tragen, ohne dabei ein zu großes Trägheitsmoment zu erzeugen, während die außenliegenden Aussparungsbereiche weiterhin eine ungünstige Abgasströmung verhindern, sodass durch die Aussparungsbereiche keine Einbußen im Wirkungsgrad hingenommen werden müssen.

In der Beschreibung und in den Ansprüchen wird unter einem Absatz eine Unterbrechung eines Verlaufs einer Oberfläche in der Art einer Stufe verstanden. Insbesondere weist ein Absatz mindestens einen, vorzugsweise mindestens zwei, Wendepunkte auf. Ein Absatz weist beispielsweise zwei Knicke in einer Fläche auf, die auch jeweils durch einen Radius gebildet sein können und zu einem Versatz der Fläche führen.

Eine weitere günstige Möglichkeit sieht vor, dass der Radrücken in einem radial äußeren Bereich des mindestens einen Aussparungsbereichs eine axiale Dicke aufweist, die kleiner ist als ein Dreißigstel, bevorzugt kleiner als ein Vierzigstel und noch bevorzugter kleiner als ein Fünfzigstel des Durchmessers des Turbinenrades.

Eine besonders günstige Möglichkeit sieht vor, dass der mindestens eine Aussparungsbereich an einer strömungsabgewandten Rückseite des Radrückens gebildet ist. Auf diese Weise hat die Bildung des mindestens einen Aussparungsbereichs keinen Einfluss auf die Strömungseigenschaften des Turbinenrades, sodass der Wirkungsgrad des Abgasturboladers nicht verschlechtert wird.

Eine weitere besonders günstige Möglichkeit sieht vor, dass der Absatz kreisförmig und koaxial zu der Drehachse an der Rückseite des Radrückens verläuft. So kann in sehr einfacher Weise der mindestens eine Aussparungsbereich gebildet werden, ohne eine Unwucht zu erzeugen.

Eine vorteilhafte Lösung sieht vor, dass der mindestens eine Aussparungsbereich ringförmig zwischen einem ersten Durchmesser und einem zweiten Durchmesser verläuft, wobei der erste Durchmesser einem Durchmesser des Radrückens entspricht. Dadurch ist der mindestens eine Aussparungsbereich außen am Radrücken des Turbinenrades gebildet. Eine Reduktion von Gewicht, das außen eingespart werden kann, trägt besonders effektiv zur Reduzierung des Trägheitsmoments bei.

Eine weitere vorteilhafte Lösung sieht vor, dass das Turbinenrad einen Wuchtbereich aufweist, welcher eine im Wesentlichen ebene Ringfläche an der Rückseite des Turbinenrades aufweist, an der Material abgetragen werden kann, um das Turbinenrad auszuwuchten. Da das Turbinenrad des Abgasturboladers im Betrieb extrem hohe Drehzahl erreicht, ist es vorteilhaft, wenn das Turbinenrad ausgewuchtet werden kann.

Eine besonders vorteilhafte Lösung sieht vor, dass der Wuchtbereich zwischen dem zweiten Durchmesser und einem dritten Durchmesser liegt, wobei der erste Durchmesser größer ist als der zweite Durchmesser und der zweite Durchmesser größer als der dritte Durchmesser. Somit liegt der mindestens eine Aussparungsbereich radial außerhalb des Wuchtbereichs, sodass die Reduzierung der Dicke innerhalb des Aussparungsbereichs sich besonders günstig auf das Trägheitsmoment des Turbinenrades auswirken kann. Darüber hinaus liegt der Wuchtbereich radial angrenzend innerhalb des mindestens einen Aussparungsbereichs. Folglich liegt der Wuchtbereich radial weit genug außen, sodass das Turbinenrad durch ein Abtragen von Material innerhalb des Wuchtbereichs effektiv ausgewuchtet werden kann.

Der mindestens eine Aussparungsbereich ist an einer Strömungsseite des Radrückens gebildet. Auf diese Weise kann die axiale Dicke des Radrückens noch flexibler angepasst werden.

Eine weitere günstige Variante sieht vor, dass der Aussparungsbereich zwischen den Schaufeln liegt. An dieser Stelle kann der Aussparungsbereich besonders günstig angeordnet werden, ohne dabei den Radrücken in Bereichen zu schwächen in denen für die Stabilität des Turbinenrads eine hohe axiale Dicke erforderlich ist.

Eine besonders günstige Variante sieht vor, dass der Absatz zwischen dem Aussparungsbereich und dem restlichen Radrücken in einem Bogen verläuft, wobei der Absatz mittig zwischen zwei Schaufeln einen geringeren Abstand zu der Drehachse aufweist als in Bereichen näher zu den Schaufeln. Auf diese Weise kann der mindestens eine Aussparungsbereich günstig angeordnet werden, ohne die Abgasströmung ungünstig zu beeinflussen.

Eine vorteilhafte Möglichkeit sieht vor, dass der Absatz einen kreisbogenförmigen Verlauf aufweist. Ein solcher Verlauf des Absatzes ist geometrisch leicht herzustellen.

Eine besonders vorteilhafte Möglichkeit sieht vor, dass das Turbinenrad Titanaluminid, insbesondere Gamma-TiAl, aufweist. Titanaluminid ist ein leichtes, hitzebeständiges Material und damit gut für das Turbinenrad des Abgasturboladers geeignet. Die durch die Gestaltung des Radrückens reduzierten Spannungen innerhalb des Turbinenrades, insbesondere die reduzierten Spannungen innerhalb des Radrückens, wirken sich besonders vorteilhaft bei einem Turbinenrad aus Titanaluminid aus.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Seitenansicht auf ein beispielhaftes Turbinenrad,
- Fig. 2: eine perspektivische Darstellung des Turbinenrads aus Fig. 1 von schräg oben, so dass ein Radrücken des Turbinenrads sichtbar ist,
- Fig. 3: eine Seitenansicht auf ein Turbinenrad gemäß der Erfindung, und
- Fig. 4: eine Frontalansicht auf das Turbinenrad aus Fig. 3, wobei eine Strömungsseite des Turbinenrades sichtbar ist.

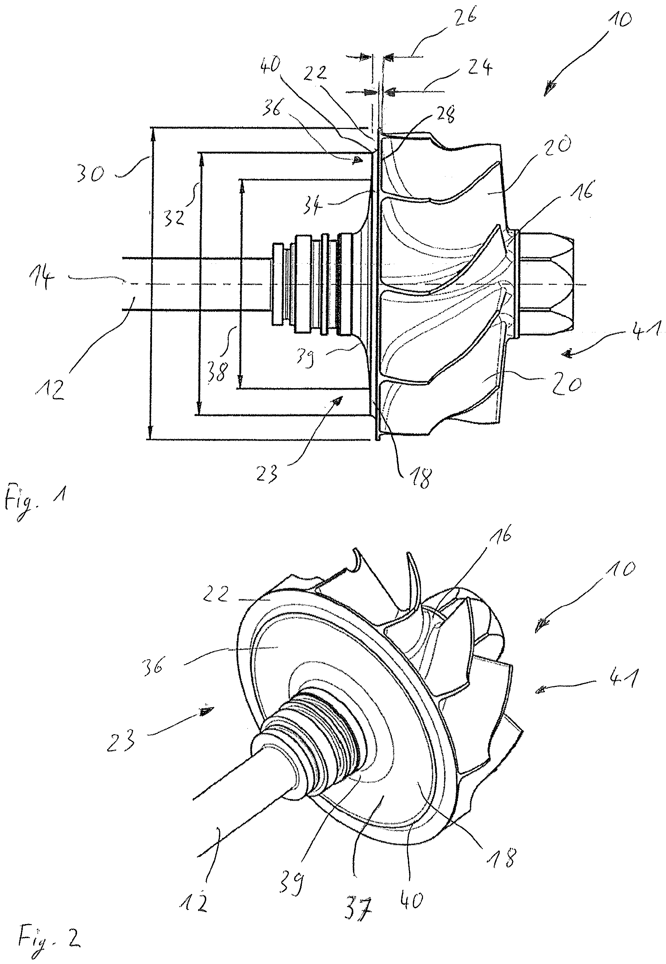

In den Figuren 1 und 2 wird ein Beispiel eines Turbinenrads 10 dargestellt. Ein nicht dargestellter Turbolader umfasst ein Turbinenrad 10, das über eine Welle 12 drehfest mit einem nicht dargestellten Verdichterrad verbunden ist, das um eine Drehachse 14 drehbar gelagert ist und das durch einen Abgasstrom angetrieben wird. Das Turbinenrad 10 weist eine Nabe 16, einen Radrücken 18 und mehrere Schaufeln 20 auf, welche sich an einer Strömungsseite 41 von der Nabe 16 aus radial nach außen und von dem Radrücken 18 aus axial erstrecken. Die Schaufeln 20 erstrecken sich also in einem durch die Nabe 16 und den Radrücken 18 aufgespannten Bereich. Die Schaufeln 20 verlaufen dabei gebogen, sodass durch die Schaufeln 20 Strömungsenergie des Abgasstroms in eine Drehbewegung des Turbinenrads 10 umgewandelt werden kann. Dadurch kann das Turbinenrad 10 und somit auch das Verdichterrad des Abgasturboladers durch den Abgasstrom angetrieben werden. An einer strömungsabgewandten Rückseite 23 des Radrückens 18 sind keine Schaufeln 20 angeordnet, so dass die Rückseite 23 einen geringen Strömungswiderstand aufweist.

Um das Trägheitsmoment des Turbinenrades 10 und Spannungen innerhalb des Radrückens 18 des Turbinenrades 10 zu reduzieren weist der Radrücken 18 des Turbinenrads 10 einen Aussparungsbereich 22 auf, der eine axiale Dicke 24 aufweist, welche im Vergleich zu einer axialen Dicke 26 des restlichen Radrückens reduziert ist. Für die Reduzierungen der Spannungen innerhalb des Radrückens 18 ist es günstig, wenn die axiale Dicke 26 des restlichen Radrückens größer als das 2,5-fache der axiale Dicke 24 in dem Aussparungsbereich 22 ist.

Der Radrücken 18 ist dabei definiert als eine Scheibe welche senkrecht zu der Welle 12 verläuft und welche wiederum durch zwei einzelne Scheiben gebildet ist, wobei eine erste Scheibe 28 einen ersten Durchmesser 30 aufweist, welcher größer ist als ein zweiter Durchmesser 32 der zweiten Scheibe 34. Der erste Durchmesser 30 entspricht dabei dem Durchmesser des Radrückens 18. Die erste Scheibe 28 ist strömungsseitig und die zweite Scheibe 34 strömungsabgewandt angeordnet, sodass dadurch der Aussparungsbereich 22 ringförmig an der strömungsabgewandten Rückseite 23 des Radrückens 18 zwischen dem ersten Durchmesser 30 und dem zweiten Durchmesser 32 gebildet ist. Die axiale Dicke 24 innerhalb des Aussparungsbereich 22 ist durch die axiale Dicke der ersten Scheibe 28 gegeben und die axiale Dicke 26 des restlichen Radrückens ist durch die Summe der axiale Dicken der ersten Scheibe 28 und der zweiten Scheibe 34 gegeben.

Der Aussparungsbereich 22 ist durch einen Absatz 40 vom restlichen Radrücken 18 getrennt. Der Absatz 40 ist auf Höhe des zweiten Durchmessers 32 dadurch gebildet, dass sich die zweite Scheibe 34 des Radrückens 18 nur bis zu dem Absatz 40 erstreckt. Dadurch verläuft der Absatz 40 ringförmig und koaxial zu der Drehachse 14. Ferner bewirkt der Absatz 40 die Reduzierung der axiale Dicke 24 in dem Aussparungsbereich 22.

Der Absatz 40 kann beispielsweise durch eine Fase gebildet sein. Alternativ oder ergänzend hierzu kann auch ein oder mehrere Radien vorgesehen sein, welche einen Versatz der Oberfläche des Radrückens 18 innerhalb des zweiten Durchmessers 32 zu der Oberfläche des Radrückens 18 in dem Aussparungsbereich 22 bewirken.

An der Rückseite 23 des Radrückens 18 ist ein Wuchtbereich 36 angeordnet, welcher eine im Wesentlichen ebene ringförmige Fläche 37 aufweist. An der Fläche 37 kann Material abgetragen werden, um das Turbinenrad 10 auszuwuchten. Der Wuchtbereich 36 erstreckt sich radial zwischen dem zweiten Durchmesser 32 und einem dritten Durchmesser 38. Der Wuchtbereich 36 ist radial nach außen durch den Absatz 40 von dem Aussparungsbereich 22 getrennt. Dadurch liegt der Wuchtbereich 36 noch in einem achsfernen Bereich, so dass durch das Abtragen von Material in dem Wuchtbereich 36 eine Unwucht des Turbinenrades 10 ausgeglichen werden kann.

Der dritte Durchmesser 38 ist gekennzeichnet durch einen Übergang an der Rückseite 23 des Radrückens 18 von der ebenen Fläche 37 im Wuchtbereich 36 zu einer gekrümmten Fläche 39, welche einen Übergang zur Nabe 16 an der strömungsabgewandten Rückseite 23 des Radrückens 18 bildet.

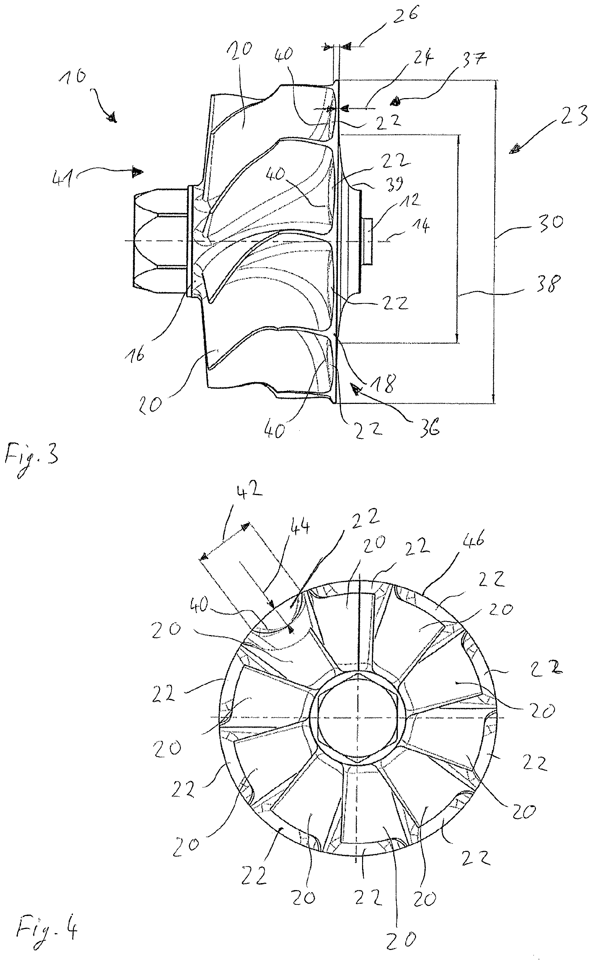

Eine in den Fig. 3 und 4 dargestellte erfindungsgemäße Ausführungsform des Abgasturboladers unterscheidet sich von der in den Fig. 1 und 2 dargestellten beispielhaften Ausführungsform des Abgasturboladers dadurch, dass der mindestens eine Aussparungsbereich 22 an der Strömungsseite 41 des Radrückens 18 angeordnet ist. Die reduzierte axiale Dicke 24 des Aussparungsbereichs 22 ist also dadurch reduziert, dass eine Oberfläche der Strömungsseite 41 des Radrückens 18 axial in Richtung Rückseite 23 versetzt ist.

Der Aussparungsbereich 22 verläuft an der Strömungsseite 41 zwischen den Schaufeln 20. Insbesondere verläuft in jedem Zwischenbereich zwischen zwei Schaufeln 20 ein Aussparungsbereich 22. Der Aussparungsbereich 22 erstreckt sich vorzugsweise mittig zwischen zwei Schaufeln 22 und weist in Umfangsrichtung eine Breite 42 auf, welche maximal dem Abstand der Schaufeln 20 auf Höhe des ersten Durchmessers 30 entspricht. Es ist aber auch möglich, dass die Breite 42 des Aussparungsbereichs 22 kleiner ist als der Abstand zweier Schaufeln 20, sodass sich der Aussparungsbereich 22 nicht bis zu den Schaufeln 20 erstreckt.

Der Aussparungsbereich 22 weist eine radiale Tiefe 44 auf. Das heißt der Aussparungsbereich 22 erstreckt sich von einem Außenrand 46 des Turbinenrads 10 radial nach innen. Folglich muss der Absatz 40, welcher den Aussparungsbereich 22 von dem restlichen Turbinenrad 10 trennt gebogen verlaufen, beispielsweise verläuft der Absatz 40 kreisabschnittsförmig. Der Verlauf des Absatzes 40 und damit die Form des Aussparungsbereichs 22 sind allerdings nicht auf einen kreisabschnittsförmigen Verlauf beschränkt. Zungenförmige Verläufe sind ebenfalls denkbar, sodass ein größerer Bereich zwischen den Schaufeln 20 des Turbinenrads 10 als Aussparungsbereich 22 gebildet sein kann. Dadurch kann noch mehr Material und damit Gewicht eingespart werden.

Für die Bauteilspannungen im Radrücken 18 ist es vorteilhaft, wenn die axiale Dicke 26 des Radrückens 18 größer als das 1,5-fache der axiale Dicke 24 des mindestens einen Aussparungsbereichs 22 ist.

Der Wuchtbereich 36 verläuft bei dem Turbinenrad 10 gemäß der zweiten Ausführungsform zwischen dem ersten Durchmesser 30 und dem dritten Durchmesser 38.

Im Übrigen stimmt die in den Fig. 3 und 4 dargestellte zweite Ausführungsform des Abgasturboladers hinsichtlich Aufbau und Funktion mit der in den Fig. 1 und 2 dargestellten ersten Ausführungsform des Abgasturboladers überein, auf deren vorstehende Beschreibung insoweit Bezug genommen wird.

Eine nicht dargestellte dritte Ausführungsform des Abgasturboladers unterscheidet sich von der in den Fig. 1 und 2 dargestellten ersten Ausführungsform des Abgasturboladers dadurch, dass das Turbinenrad 10 zusätzlich zu dem an der Rückseite 23 angeordneten Aussparungsbereich 22 mindesten einen weiteren Aussparungsbereich 22 an der Strömungsseite 41 entsprechend der in den Fig. 3 und 4 dargestellten zweiten Ausführungsform des Abgasturboladers aufweist, auf deren vorstehende Beschreibung insoweit Bezug genommen wird.

Die dritte Ausführungsform ist also eine Kombination der ersten und der zweiten Ausführungsform, bei der sowohl an der Strömungsseite 41 als auch an der Rückseite 23 des Turbinenrades 10 jeweils mindestens ein Aussparungsbereich 22 angeordnet ist.

Im Übrigen stimmt die dritte Ausführungsform des Abgasturboladers mit der in den Fig. 1 und 2 dargestellten ersten Ausführungsform des Abgasturboladers hinsichtlich Aufbau und Funktion überein, auf deren vorstehende insoweit Bezug genommen wird.

## Patentansprüche

1. Abgasturbolader mit einem Turbinenrad (10), das über eine Welle (12) drehfest mit einem Verdichterrad verbunden ist, wobei das Turbinenrad (10) eine Nabe (16), einen scheibenartigen Radrücken (18) und mehrere Schaufeln (20) aufweist, die sich von der Nabe (16) aus radial und von dem Radrücken (18) aus axial erstrecken,
- wobei der Radrücken (18) des Turbinenrades (10) mindestens einen Aussparungsbereich (22) mit reduzierter axialer Dicke (24) aufweist, und
- wobei der mindestens eine Aussparungsbereich (22) durch einen Absatz (40) am Radrücken (18) begrenzt ist, der den mindestens einen Aussparungsbereich (22) mit reduzierter axialer Dicke (24) von dem restlichen Radrücken (18) mit nicht reduzierter axialer Dicke (26) trennt,
- wobei der der mindestens eine Aussparungsbereich (22) eine radiale Tiefe (44) aufweist und sich von einem Außenrand (46) des Turbinenrads (10) radial nach innen erstreckt, **dadurch gekennzeichnet, dass** der mindestens eine Aussparungsbereich (22) an einer Strömungsseite (41) des Radrückens (18) gebildet ist.

2. Abgasturbolader nach Anspruch 1,
**dadurch gekennzeichnet,**
**dass** der Radrücken (18) in einem radial äußeren Bereich des mindestens einen Aussparungsbereichs (22) eine axiale Dicke (24) aufweist, die kleiner ist als ein Dreißigstel, bevorzugt kleiner als ein Vierzigstel und noch bevorzugter kleiner als ein Fünfzigstel des Durchmessers (30) des Turbinenrades (10).

3. Abgasturbolader nach Anspruch 1 oder 2,
**dadurch gekennzeichnet,**
**dass** ein weiterer Aussparungsbereich (22) an einer strömungsabgewandten Rückseite (23) des Radrückens (18) gebildet ist.

4. Abgasturbolader nach Anspruch 3,
**dadurch gekennzeichnet,**
**dass** der weitere Aussparungsbereich (22) ringförmig zwischen einem ersten Durchmesser (30) und einem zweiten Durchmesser (32) verläuft, wobei der erste Durchmesser (30) einem Durchmesser des Radrückens (18) entspricht.

5. Abgasturbolader nach Anspruch 4,
**dadurch gekennzeichnet,**
**dass** das Turbinenrad (10) einen Wuchtbereich (36) aufweist, welcher eine im Wesentlichen ebene Ringfläche (37) an der Rückseite des Turbinenrades (10) aufweist, an der Material abgetragen werden kann, um das Turbinenrad (10) auszuwuchten.

6. Abgasturbolader nach Anspruch 5,
**dadurch gekennzeichnet,**
**dass** der Wuchtbereich (36) zwischen dem zweiten Durchmesser (32) und einem dritten Durchmesser (38) liegt, wobei der erste Durchmesser (30) größer ist als der zweite Durchmesser (32) und der zweite Durchmesser (32) größer ist als der dritte Durchmesser (38).

7. Abgasturbolader nach einem der Ansprüche 1 bis 6,
**dadurch gekennzeichnet,**
**dass** der mindestens eine Aussparungsbereich (22) zwischen den Schaufeln (20) liegt.

8. Abgasturbolader nach einem der Ansprüche 1 bis 7,
**dadurch gekennzeichnet,**
**dass** der Absatz (40) zwischen dem mindestens einen Aussparungsbereich (22) und dem restlichen Radrücken (18) in einem Bogen verläuft, wobei der Absatz (40) mittig zwischen zwei Schaufeln (20) einen geringeren Abstand zu der Drehachse (14) aufweist, als in Bereichen näher zu den Schaufeln (20).

9. Abgasturbolader nach Anspruch 8,
**dadurch gekennzeichnet,**
**dass** der Absatz (40) einen kreisbogenförmigen Verlauf aufweist.

10. Abgasturbolader nach einem der Ansprüche 1 bis 9,
**dadurch gekennzeichnet,**
**dass** das Turbinenrad (10) Titanaluminid, insbesondere Gamma-TiAl, aufweist.

## Claims

1. Exhaust gas turbo charger having a turbine wheel (10) which is connected non-rotationally via a shaft (12) with a compressor impeller, wherein the turbine wheel (10) has a hub (16), a disc-like wheel back (18) and several vanes (20) which extend out from the hub (16) radially and out from the wheel back (18) axially,
- wherein the wheel back (18) of the turbine wheel (10) has at least one cut-away portion (22) having reduced axial thickness (24), and
- wherein the at least one cut-away portion (22) is delimited by a shoulder (40) on the wheel back (18), which separates the at least one cut-away portion (22) having reduced axial thickness (24) from the remaining wheel back (18) having non-reduced axial thickness (26),
- wherein the the at least one cut-away portion (22) has a radial depth (44) and extends from an outer edge (46) of the turbine wheel (10) radially to the interior, **characterised in that** the at least one cut-away portion (22) is formed on a flow side (41) of the wheel back (18).

2. Exhaust gas turbo charger according to claim 1,
**characterised in**
**that** the wheel back (18) in a radially outer portion of the at least one cut-away portion (22) has an axial thickness (24) which is less than one-thirtieth, preferably less than one-fortieth and still more preferably less than one-fiftieth of the diameter (30) of the turbine wheel (10).

3. Exhaust gas turbo charger according to claim 1 or 2,
**characterised in**
**that** a further cut-away portion (22) is formed on a back side (23) of the wheel back (18) facing away from the flow.

4. Exhaust gas turbo charger according to claim 3,
**characterised in**
**that** the further cut-away portion (22) extends in an annular manner between a first diameter (30) and a second diameter (32), wherein the first diameter (30) is equal to a diameter of the wheel back (18).

5. Exhaust gas turbo charger according to claim 4,
**characterised in**
**that** the turbine wheel (10) has a weight portion (36) which has a substantially planar annular section (37) on the back side of the turbine wheel (10) from which material can be removed in order to counterbalance the turbine wheel (10).

6. Exhaust gas turbo charger according to claim 5,
**characterised in**
**that** the weight portion (36) is located between the second diameter (32) and a third diameter (38), wherein the first diameter (30) is greater than the second diameter (32) and the second diameter (32) is greater than the third diameter (38).

7. Exhaust gas turbo charger according to any of claims 1 to 6,
**characterised in**
**that** the at least one cut-away portion (22) lies between the vanes (20).

8. Exhaust gas turbo charger according to any of claims 1 to 7,
**characterised in**
**that** the shoulder (40) between the at least one cut-away portion (22) and the remaining wheel back (18) extends in a curve, wherein the shoulder (40) centrally between two vanes (20) has a lesser distance to the rotational axis (14) than in portions nearer to the vanes (20).

9. Exhaust gas turbo charger according to claim 8,
**characterised in**
**that** the shoulder (40) has an arc-shaped course.

10. Exhaust gas turbo charger according to any of claims 1 to 9,
**characterised in**
**that** the turbine wheel (10) comprises titanium aluminide, in particular gamma-TiAl.

## Revendications

1. Turbocompresseur avec une roue de turbine (10) qui est reliée de manière solidaire en rotation à une roue de compresseur par l'intermédiaire d'un arbre (12), dans lequel la roue de turbine (10) comporte un moyeu (16), un arrière de roue (18) sous forme de disque et plusieurs pales (20) qui s'étendent de façon radiale à partir du moyeu (16) et de façon axiale à partir de l'arrière de roue (18),
- dans lequel l'arrière de roue (18) de la roue de turbine (10) comporte au moins une zone évidée (22) ayant une épaisseur axiale (24) réduite, et
- dans lequel l'au moins une zone évidée (22) est délimitée par un gradin (40) au niveau de l'arrière de roue (18), lequel gradin sépare l'au moins une zone évidée (22) à épaisseur axiale (24) réduite du reste de l'arrière de roue (18) à épaisseur axiale (26) non réduite,
- dans lequel la l'au moins une zone évidée (22) présente une profondeur radiale (44) et s'étend de façon radiale vers l'intérieur à partir d'un bord extérieur (46) de la roue de turbine (10),
**caractérisé en ce que** l'au moins une zone évidée (22) est formée au niveau d'un côté d'écoulement (41) de l'arrière de roue (18).

2. Turbocompresseur selon la revendication 1,
**caractérisé en ce**
**que** l'arrière de roue (18) présente dans une zone de façon radiale extérieure de l'au moins une zone évidée (22) une épaisseur axiale (24) qui est plus petite qu'un tiers, de préférence plus petite qu'un quart et de manière encore plus préférée plus petite qu'un cinquième, du diamètre (30) de la roue de turbine (10).

3. Turbocompresseur selon la revendication 1 ou 2,
**caractérisé en ce**
**qu'**une autre zone évidée (22) est formée au niveau d'un côté arrière (23), éloigné de l'écoulement, de l'arrière de roue (18).

4. Turbocompresseur selon la revendication 3,
**caractérisé en ce**
**que** l'autre zone évidée (22) s'étend en forme d'anneau entre un premier diamètre (30) et un deuxième diamètre (32), le premier diamètre (30) correspondant à un diamètre de l'arrière de roue (18).

5. Turbocompresseur selon la revendication 4,
**caractérisé en ce**
**que** la roue de turbine (10) comporte une zone d'équilibrage (36) qui comporte au niveau du côté arrière de la roue de turbine (10) une surface annulaire (37) globalement plane au niveau de laquelle de la matière peut être enlevée pour équilibrer la roue de turbine (10).

6. Turbocompresseur selon la revendication 5,
**caractérisé en ce**
**que** la zone d'équilibrage (36) se trouve entre le deuxième diamètre (32) et un troisième diamètre (38), le premier diamètre (30) étant plus grand que le deuxième diamètre (32) et le deuxième diamètre (32) étant plus grand que le troisième diamètre (38).

7. Turbocompresseur selon l'une quelconque des revendications 1 à 6,
**caractérisé en ce**
**que** l'au moins une zone évidée (22) se trouve entre les pales (20).

8. Turbocompresseur selon l'une quelconque des revendications 1 à 7,
**caractérisé en ce**
**que** le gradin (40) entre l'au moins une zone évidée (22) et le reste de l'arrière de roue (18) s'étend en un arc, lequel gradin (40) présente au milieu entre deux pales (20) une distance à l'axe de rotation (14) plus petite que dans des zones plus proches des pales (20).

9. Turbocompresseur selon la revendication 8,
**caractérisé en ce**
**que** le gradin (40) s'étend en forme d'arc de cercle.

10. Turbocompresseur selon l'une quelconque des revendications 1 à 9,
**caractérisé en ce**
**que** la roue de turbine (10) comporte de l'aluminure de titane, en particulier du Gamma-TiAl.
